# EUROPEAN PATENT APPLICATION

(11) **EP 4 574 376 A1**
(43) Date of publication of application: **25.06.2025**
(21) Application number: 23383347.4
(22) Date of filing: 21.12.2023
(51) Int. Cl.: B29B 17/00, B29B 17/04, B29K 105/08, B29K 105/24

(54) **METHOD TO PRODUCE A RECYCLED MATERIAL WITH PREFERRED ORIENTATION OF FIBRES FROM THE MULTILAYER UNCURED PREPREG SCRAP GENERATED IN THE MANUFACTURING OF AERONAUTICAL PARTS WITH PREPREG MATERIAL**

(71) Applicant: Airbus Operations, S.L.U., 28906 Getafe (Madrid) (ES)
(72) Inventor: BLANCO VARELA, Tamara, Getafe (ES); CALERO CASANOVA, Álvaro, Getafe (ES); LOPEZ ROMANO, Bernardo, Getafe (ES); ORDOÑEZ MUÑOZ, María, Getafe (ES)
(74) Representative: Elzaburu S.L.P.

(57) **Abstract**

Method to produce a recycled material with preferred orientation of fibres from the multilayer uncured prepreg scrap generated in the manufacturing of aeronautical parts with prepreg material, that comprises the following steps:
- collection of the unused scrap from the manufacturing of aeronautical parts,
- removal of materials other than the prepreg material of the scrap,
- transfer of the scrap free of additional materials to a cutting station,
- cutting the scrap in strips parallel to the predominant orientation of the fibres in the cutting station,
- transfer of the strips to a station of several successive stages of rollers, and
- the strips pass through each successive stage of rollers in the station, such that the thickness of the strips is progressively reduced after passing through each successive stage of rollers in the station.

## Description

### Field of the invention

The invention refers to a method to produce a recycled material with preferred orientation of fibres from the multilayer uncured prepreg scrap generated in the manufacturing of aeronautical parts with prepreg material.

It belongs to the field of the recycling of materials used in the manufacturing of aeronautical parts, in order to be able to obtain new parts with homogeneous properties.

### Background of the invention

The recycling of composite materials is a problematic process, as the reuse of recovered fibres in new parts is limited due to the reduced performance of these fibres.

Recovered fibres will be shorter and of variable length compared to virgin material, making the use of these materials complicated compared to the recycling of other materials such as metal, where it is sufficient to melt and reshape to obtain a raw material similar to the original one.

It must also be considered that the scraps produced during manufacturing steps could be completely different (dry fibres, impregnated but uncured materials, cured materials...). For this reason, its processing must be specific for each scrap source in order to retain the fibre potential performances as much as possible.

There are different solutions for materials obtained from recovered/recycled fibres coming from serial production scrap or from recovered fibres after resin removal processes.

These solutions are based on:
- Chopping uncured prepreg material, combining or not with additional resin, and processing to get a sheet moulding compound material to be used as a conventional prepreg, but without defined orientation. See J. Palmer, L. Savage, O.R. Ghita, K.E. Evans, "Sheet moulding compound (SMC) from carbon fibre recyclate", Composites Part A: Applied Science and Manufacturing, Vol. 41, Issue 9, September 2010, Pages 1232-1237.
- Chopping of dry carbon fibres until dust to be used as a filler. See E. Uhlmann, P. Meier, "Carbon Fibre Recycling from Milling Dust for the Application in Short Fibre Reinforced Thermoplastics", Procedia CIRP, Vol. 66, 2017, Pages 277-282.
- Chopping of carbon fibres until fragments of a few millimetres to be used as filler for thermoplastic pellets for ALM or injection. See N. Gianni, L. Mazzocchetti, T. Benelli, F. Picchioni, L. Giorgini, "Towards sustainability in 3D printing of thermoplastic composites: Evaluation of recycled carbon fibres as reinforcing agent for FDM filament production and 3D printing", Composites Part A: Applied Science and Manufacturing, Vol. 159, August 2022, 107002.
- Chopping of carbon fibres until fragments of a few millimetres to be used with resin in the injection process.
- Homogenization of carbon fibres and carding to get a thin mat which is used by cross-lapping and needle punching to get a non-woven mat.

All these solutions lead to materials without any orientation, except in the case of non-woven mats in which certain orientation exists. It must also be considered that these recycling/recovering processes have a homogenization step in which fibres or fragments are homogenized into fragments in the size range of 1-3 mm for the shorter fibre solutions up to 30-60 mm for the longest ones.

All these facts lead to poor mechanical performances of the recycled materials and with a high deviation due to inhomogeneity, in most of the cases only slightly better than un-reinforcement resins.

### Summary of the invention

The object of the invention is to provide a method to produce a recycled material with preferred orientation of fibres from the multilayer uncured prepreg scrap generated in the manufacturing of aeronautical parts with prepreg material, in which the obtained recycled material is more suitable to be used in new parts with homogeneous properties.

The invention provides a method to produce a recycled material with preferred orientation of fibres from the multilayer uncured prepreg scrap generated in the manufacturing of aeronautical parts with prepreg material that comprises the following steps:
- collection of the unused scrap from the manufacturing of aeronautical parts,
- removal of materials other than the prepreg material of the scrap,
- transfer of the scrap free of additional materials to a cutting station,
- cutting the scrap in strips parallel to the predominant orientation of the fibres in the cutting station,
- transfer of the strips to a station of several successive stages of rollers, and
- the strips pass through each successive stage of rollers in the station, such that the thickness of the strips is progressively reduced after passing through each successive stage of rollers in the station.

The final product obtained with this method is a thinner product to be used in new parts with homogenous properties, in which the preferred directions of the fibre are maintained.

Other characteristics and advantages of the present invention will be clear from the following detailed description of several embodiments illustrative of its object in relation to the attached figures.

### Brief description of drawings

Figure 1 shows the useful part and the scrap obtained in the production of aeronautical parts, such as stringers.
Figure 2 shows the cutting of the scrap of Figure 1 into long strips parallel to the predominant orientation of the fibres.
Figure 3 is a flowchart showing the steps of the method of the invention.
Figure 4A is side view of the station of several successive stages of rollers with a strip crossing it.
Figure 4B is a plan view of the station of several successive stages of rollers of Figure 4A with a strip crossing it.
Figure 5A is side view of the station of several successive stages of rollers with a plurality of strips crossing it.
Figure 5B is a plan view of the station of several successive stages of rollers of Figure 5A with a plurality of strips crossing it.

### Detailed description of the invention

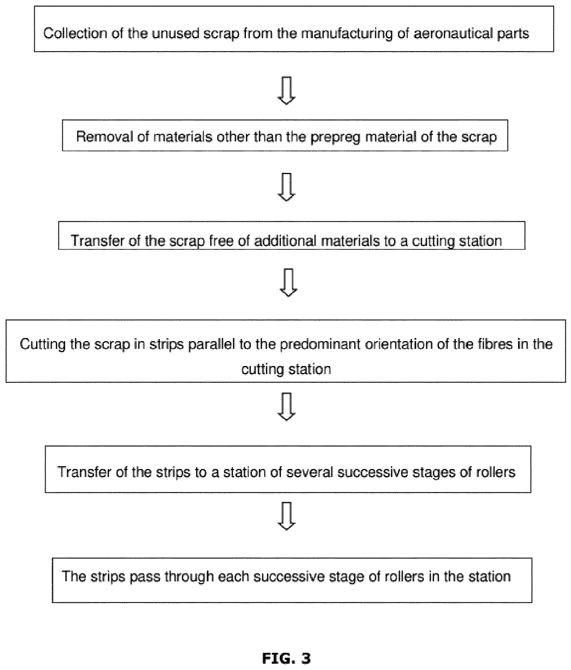

The invention refers to a method to produce a recycled material with preferred orientation of fibres from the multilayer uncured scrap generated in the manufacturing of aeronautical parts with prepreg material, and a flowchart of the steps of this method is shown in Figure 3.

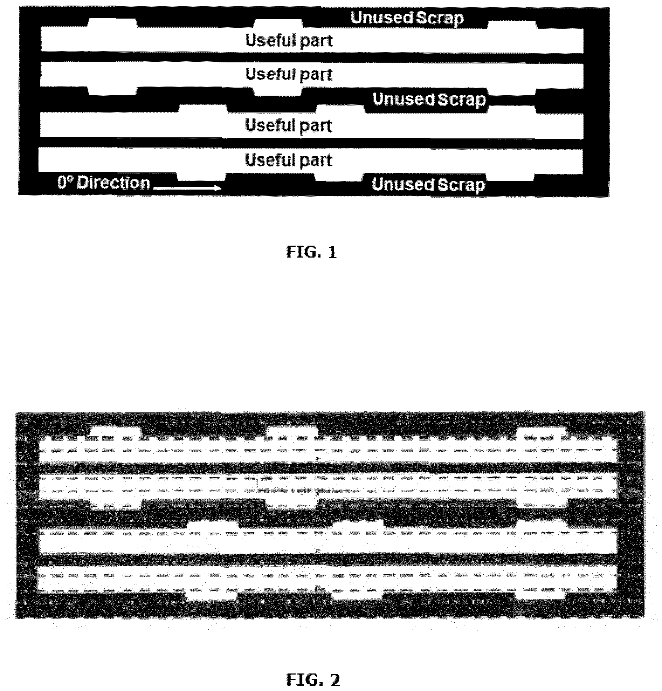

The first step is the collection of the unused and uncured scrap from the manufacturing of aeronautical parts. Figure 1 shows the useful part and the scrap obtained in the production of an aeronautical part with ATL (Automated Tape Lay-up), such as a stringer or a stiffener. The 0º orientation (or direction) is shown with an arrow in Figure 1, and is the predominant orientation of the fibres of the unused scrap in that figure.

Afterwards, any type of additional materials other than the multilayer uncured prepreg material of the scrap (for instance, auxiliary materials, metal inserts, etc.) are removed. This removal can be done manually.

When the material is free of additional materials other than the multilayer uncured prepreg material of the scrap, it is placed on a conveyor belt and is transferred to a cutting station. In the cutting station a machine with blades cuts the material in strips parallel to the predominant orientation of the fibres. Figure 2 shows the cutting of the scrap of Figure 1 into long strips parallel to the predominant orientation (or direction) of the fibres.

Once the material is cut into strips, the strips are placed on a conveyor belt and are transferred to a station of several successive stages of rollers, which can be self-heating rollers.

The following step is critical, as the reduction of the starting thickness of the strip is obtained by means of using a system of rollers. Thanks to the fact that the original laminate is known and contains a high percentage of fibres oriented to 0º, the thickness reduction is achieved using a roller system in which the thickness of the strips is progressively reduced after passing through each successive stage of rollers in the station. This reduction in thickness can be 10-20% after passing through each successive stage of rollers.

In this way, strips with a final thickness of less than 1 mm are obtained. Thanks to this reduction, new parts can be manufactured where the mechanical properties can be estimated because the fibre directions are known in advance.

It is also possible to reduce the deviation in the properties thanks to the homogenization achieved in the new material, and the mechanical properties obtained are very promising.

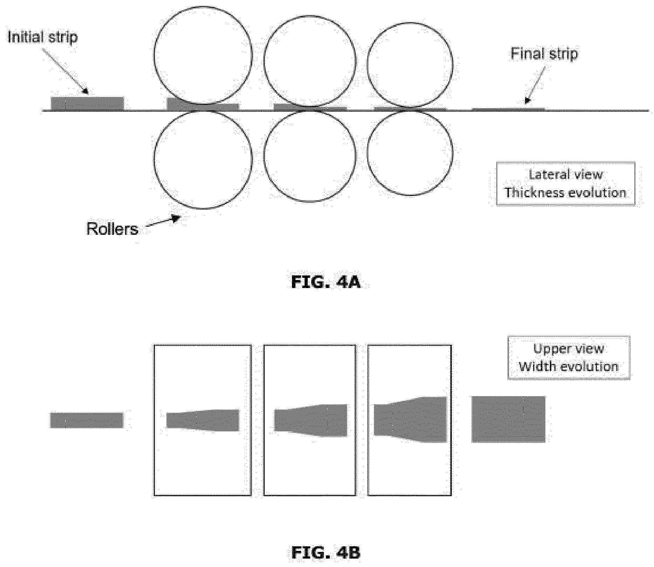

Figures 4A and 4B show the station of several successive stages of rollers with a strip crossing it. In Figure 4A it can be seen that the thickness of the strip is reduced after passing through each stage of rollers, such that the strip at the end of the station has a reduced thickness compared to the strip at the beginning of the station. On the other hand, in Figure 4B (plan view) it can be seen the width evolution of the strip after passing through the successive stages of rollers.

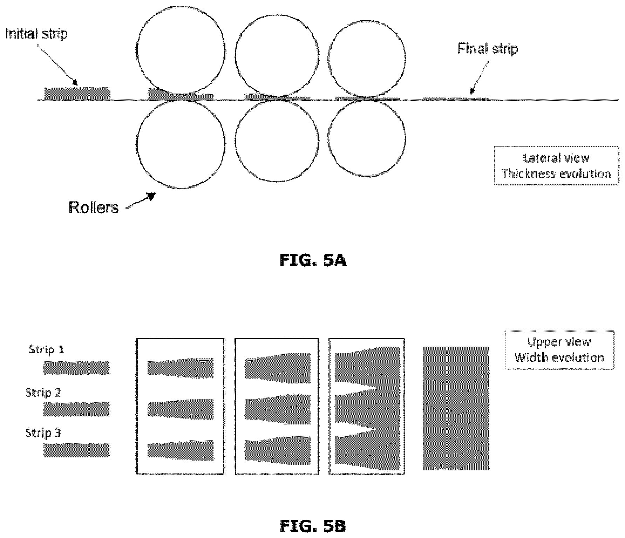

Figures 5A and 5B show the station of several successive stages of rollers with several strips crossing it and arranged in parallel at the beginning of the station. In Figure 5A it can be seen that the thickness of the strips is reduced after passing through each stage of rollers, such that the strips at the end of the station have a reduced thickness compared to the strips at the beginning of the station. On the other hand, in Figure 5B (plan view) it can be seen the width evolution of the strips after passing through the successive stages of rollers. In the last stages the strips converge laterally forming a single and wider product after passing through the last stage of rollers. The product so obtained, with a wider format, can be used afterwards as a conventional roll in a cutting machine, or can be used as a base for the manufacturing of new parts using a stamping process.

The rollers in each successive stage of rollers can be arranged in pairs.

The aeronautical parts from which the scrap with prepreg material is obtained can be stringers or stiffeners.

The transfer of the strips in the station of several successive stages of rollers is done with the strips oriented in the predominant orientation of the fibres (for instance the 0º orientation of Figure 1)

A method to produce an aeronautical part (such as fairings or leading edges) can use recycled material with preferred orientation of fibres from the multilayer uncured prepreg scrap generated in the manufacturing of aeronautical parts with prepreg material. The recycled material can be produced according to the methods previously described.

Although the present invention has been fully described in connection with preferred embodiments, it is evident that modifications may be introduced within the scope thereof, not considering this as limited by these embodiments, but by the contents of the following claims.

## Claims

1. Method to produce a recycled material with preferred orientation of fibres from the multilayer uncured prepreg scrap generated in the manufacturing of aeronautical parts with prepreg material, that comprises the following steps:
- collection of the unused scrap from the manufacturing of aeronautical parts,
- removal of materials other than the prepreg material of the scrap,
- transfer of the scrap free of additional materials to a cutting station,
- cutting the scrap in strips parallel to the predominant orientation of the fibres in the cutting station,
- transfer of the strips to a station of several successive stages of rollers, and
- the strips pass through each successive stage of rollers in the station, such that the thickness of the strips is progressively reduced after passing through each successive stage of rollers in the station.

2. Method to produce a recycled material with preferred orientation of fibres from the multilayer uncured prepreg scrap generated in the manufacturing of aeronautical parts with prepreg material, according to claim 1, wherein the rollers are self-heating rollers.

3. Method to produce a recycled material with preferred orientation of fibres from the multilayer uncured prepreg scrap generated in the manufacturing of aeronautical parts with prepreg material, according to claim 1 or 2, wherein the thickness of the strips is progressively reduced by 10-20% after passing through each successive stage of rollers in the station.

4. Method to produce a recycled material with preferred orientation of fibres from the multilayer uncured prepreg scrap generated in the manufacturing of aeronautical parts with prepreg material, according to any of claims 1 to 3, wherein the rollers in each successive stage of rollers are arranged in pairs.

5. Method to produce a recycled material with preferred orientation of fibres from the multilayer uncured prepreg scrap generated in the manufacturing of aeronautical parts with prepreg material, according to any of claims 1 to 4, wherein the transfer of the strips in the station of several successive stages of rollers is done with the strips oriented in the predominant orientation of the fibres.

6. Method to produce a recycled material with preferred orientation of fibres from the multilayer uncured prepreg scrap generated in the manufacturing of aeronautical parts with prepreg material, according to any of claims 1 to 5, in which several strips are arranged in parallel at the beginning of the station of successive stages of rollers, such that after passing through the last stage of rollers the strips converge laterally forming a single and wider product.

7. Method to produce a recycled material with preferred orientation of fibres from the multilayer uncured prepreg scrap generated in the manufacturing of aeronautical parts with prepreg material, according to any of claims 1 to 6, in which the removal of materials other than the prepreg material of the scrap is done manually.

8. Method to produce a recycled material with preferred orientation of fibres from the multilayer uncured prepreg scrap generated in the manufacturing of aeronautical parts with prepreg material, according to any of the previous claims, wherein the transfer of the scrap free of additional materials to a cutting station and the transfer of the strips to a station of successive stages of rollers is carried out by means of respective conveyor belts.

9. Method to produce a recycled material with preferred orientation of fibres from the multilayer uncured prepreg scrap generated in the manufacturing of aeronautical parts with prepreg material, according to any of the previous claims, wherein the aeronautical parts from which the scrap with prepreg material is obtained are stringers or stiffeners.

10. Method to produce an aeronautical part with recycled material with preferred orientation of fibres from the multilayer uncured prepreg scrap generated in the manufacturing of aeronautical parts with prepreg material according to any of the previous claims, wherein the aeronautical parts are fairings or leading edges.
